# EUROPEAN PATENT SPECIFICATION

(11) **EP 1 790 565 B1**
(45) Date of publication and mention of the grant of the patent: **18.08.2010**
(21) Application number: 06023878.9
(22) Date of filing: 17.11.2006
(51) Int. Cl.: B63B 27/14

(54) **An evacuation slide**
Evakuierrutsche
Toboggan d'évacuation

(30) Priority: 24.11.2005 DK 200501649
(43) Date of publication of application: 30.05.2007
(73) Proprietor: VIKING LIFE-SAVING EQUIPMENT A/S, 6710 Esbjerg V (DK)
(72) Inventor: Nielsen, Poul Henning, 6715 Esbjerg N (DK); Rom, Jacob Einar Jensen, 2120 Dronningmølle (DK)
(74) Representative: Hoffmann, Claus

(56) References cited:
- DE-A1- 4 309 954
- FR-A- 2 200 745
- FR-A- 2 505 767
- GB-A- 2 131 369

## Description

### Technical field of the invention

The present invention relates to an evacuation slide having an inlet end, an outlet end and a longitudinal part extending between said end, the longitudinal part comprise at least two longitudinal inflatable chambers and at least one slide path.

### Background art

The requirement for reliably evacuation of ship passengers and crew members in event of an emergency is well known. A conventional method for quick evacuation of a large number of passengers dry-shoed from a vessel or ship is to provide an evacuation slide from the vessel to a platform or a liferaft.

These inflatable slides may normally be stored in a container or packsack onboard, requiring a minimum of space on the vessel. In case of evacuation the slide are typical either mounted on the ship deck or immediately adjacent thereto. The slide is then rapidly made ready for evacuation of passengers, for instance by inflating it, wherein after the passengers in a very short period of time are being evacuated from the vessel via the evacuation slide to the liferaft.

The routine during evacuation procedures is that a deflated liferaft is thrown into the water, thereafter being inflated and moored to the vessel side. Subsequently, the evacuation slide, which is safely connected to the vessel, is lowered into the liferaft. Hereinafter the evacuation of persons may take place. However, evacuation often take place during extreme weather conditions, i.e. heavy wind, high waves, all conditions which influences on the evacuation, due to the movements of the liferaft, evacuation slide and the vessel.

FR-A-2 200 745 discloses a telescopic chute attached to a pneumatic platform.

Several disadvantages have been observed with the above-mentioned evacuation procedure, namely:
i) the person being evacuated may end up at the end of the evacuation slide and shall be removed from the area, which is in immediate extension of the evacuation slide, this often take relatively long time due to the evacuated person feel secure and "forgets" to move away from the evacuation slide;
ii) the evacuation slide moves inside the liferaft whereby a person may be pushed over by the evacuation slide;
iii) the evacuated person may be jammed between the evacuation slide and the edge of the liferaft;
iv) the evacuation slide, during extreme weather conditions, may be lifted up from the bottom of the liferaft, whereby the evacuated person may fall of the evacuation slide and be squeezed by the evacuation slide;
v) the evacuated person, during extreme weather conditions, may be squeezed between the evacuation slide and a canopy of the liferaft.

### Summary of the invention

An object of the present invention is to wholly or partly overcome the above disadvantages and drawbacks of the prior art.

The above object, together with numerous other objects, advantages and features, which will become evident from the below description, are accomplished by a solution in accordance with the present invention by a stop element is arranged transversely to the longitudinal part, extending upwards from the longitudinal part at the outlet end.

Hereby, an evacuation slide is obtained, wherein the evacuated person is forced to leave the slide due to the fact that the person is being stopped by the stop element at the outlet end of the slide. Furthermore, by implementing the stop element according to the invention in the evacuation slide it is obtained that the evacuated person not is able to be squeezed between the outlet end of the evacuation slide and the liferaft.

The matter is that during the evacuation procedure, the person to be evacuated enters the evacuation slide at the inlet end, then slide down towards the outlet end of the evacuation slide. At the outlet end the person slide into the stop element arranged according to the invention. When the person is stopped by the stop element, he or she leaves the evacuation slide, preferably by leaving the evacuation slide laterally. Hereinafter the evacuation slide is ready for a new person.

In an expedient embodiment according to the invention, the stop element is extending upwards from the longitudinal part with an angle between 60 and 150 degrees in relation to said longitudinal part, preferably 80 and 120 degrees.

Advantageously, the stop element may be inflatable, whereby the stop element may be inflated at the same time as the rest of the evacuation slide. A further advantage by the stop element is inflatable is that the stop element may have some bounce effect, which facilitate stop of the person to be evacuated when he or she slide into the stop element.

In a preferred embodiment according to the invention the stop element may comprise a frame structure for supporting a fabric, whereby an expedient stop element is obtained. An additional advantage is that the person to be evacuated experiences a high degree of security due to the fact that he or she feels that they will be caught by the fabric when they slide down the evacuation slide.

The term "frame structure" is in this context to be construed as being a structure consisting of elements which in expedient manner may hold and stretch a fabric. Some designs of the frame structure will be described further below.

The term "fabric" is in this context to be construed as being a cloth, a net, a durable textile, a canvas or a coated fabric or the like.

In a preferred embodiment said frame structure may be inflatable.

According to a preferred embodiment of the invention the stop element may be integrated with the slide.

In a further embodiment of the invention, the height of the stop element is between 0.3 and 2.0 meters, preferably between 0.5 and 1.2 meters, most preferable between 0.7 and 0.9 meters. The term "height" is in this context to be construed as being the distance from the slide path or the upper side of the longitudinal part to the upper end of the stop element.

In an expedient embodiment according to the invention an exit may be arranged between the stop clement and the longitudinal chambers, which facilitates exit of the evacuated person from the evacuation slide.

Furthermore, at least one of the longitudinal chambers may end before the stop element so that the exit is formed there between.

In an embodiment according to the invention the height of at least one of the longitudinal chambers may be decreased at the outlet end of slide.

In another embodiment according to the invention, the slide path may be tapered at the outlet end of the slide.

Advantageously according to the invention the evacuation slide may be used in connection with ships or vessels.

### Brief description of the drawings

The invention and its many advantages will be described in more detail below with reference to the accompanying schematic drawings, which for the purpose of illustration show some non-limiting embodiments and in which
Fig. 1 shows in a top view part of a vessel and two liferafts moored to the vessel and an evacuation slide,
Fig. 2 shows in a side view the evacuation slide according to the invention,
Fig. 3 shows in a top view the evacuation slide,
Fig. 4 shows in a side view the evacuation slide, and
Figs. 5a-5f show different embodiments of the stop element according to the invention.

All the figures are highly schematic and not necessarily to scale, and they show only parts which are necessary in order to elucidate the invention, other parts being omitted or merely suggested.

### Description of preferred embodiments

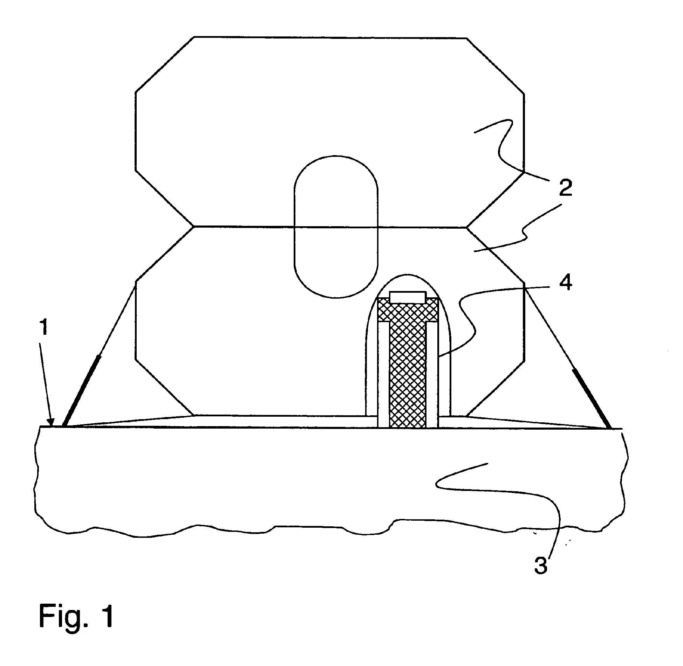

Fig. 1 shows in a top view a part of a vessel or ship 1 in an evacuation situation. To said vessel 1 two liferafts 2 are moored outside each other. From the deck 3 of the vessel 1 to the liferaft closest to the vessel 1 is an evacuation slide 4 according to the invention arranged and being ready for use.

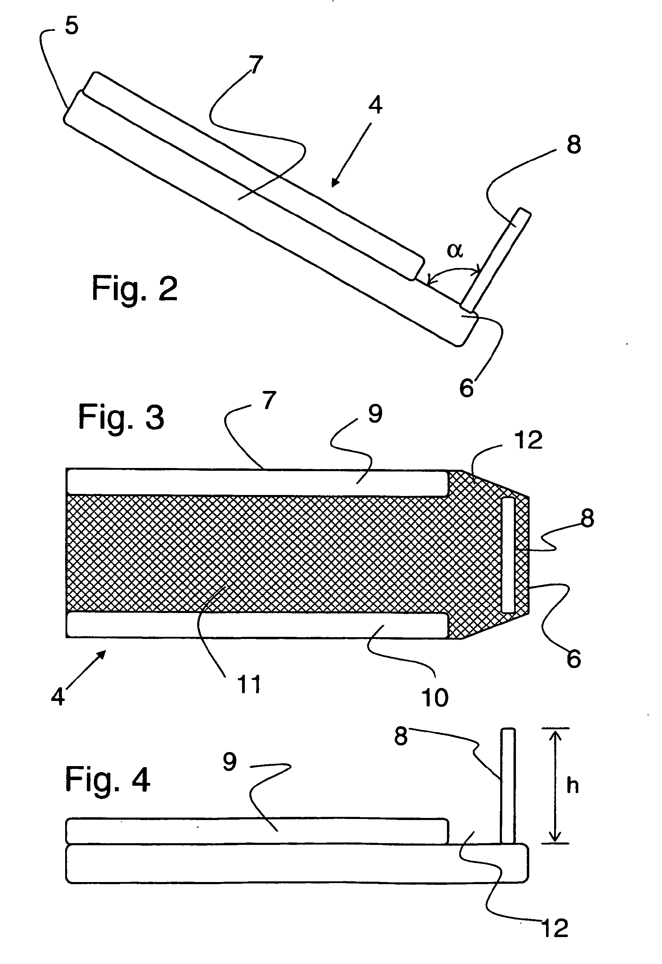

In Fig. 2 the evacuation slide 4 is shown in a side view. The evacuation slide 4 comprises an inlet end 5, which is placed in connection with the vessel, and an outlet end 6. Between said ends 5, 6 a longitudinal part 7 is arranged. At the outlet end 6 a stop element 8 according to the invention is arranged. The stop clement 8 is extending upwards from the longitudinal part 7 with an angle α between 60 and 150 degrees in relation to said longitudinal part, preferably 80 and 120 degrees.

In Fig. 3 the evacuation slide 4 is shown in a top view. The longitudinal part 7 of the evacuation slide 4 comprises at least two longitudinal inflatable chambers 9, 10 and at least one slide path 11. The two longitudinal inflatable chambers 9, 10 are in this embodiment arranged with the slide path 11 between them. In another (not shown) embodiment a further longitudinal inflatable chamber may be arranged substantially between said longitudinal chambers 9, 10, whereby two slide paths are formed, so that a so-called dual track evacuation slide is provided.

At the outlet end 6 the stop element is arranged transversely to the longitudinal part 7. Furthermore, in this embodiment according to the invention an exit 12 is arranged between the stop element 8 and the longitudinal chambers 9,10, which facilitates exit of the evacuated person from the evacuation slide 4. In this embodiment both longitudinal chambers 9, 10 end before stop element 8 so that exits are arranged on each side of the evacuation slide 4, which again facilitate exit of the evacuated persons. However, within the inventive idea only one of the longitudinal chambers may end before the stop element so that only one exit is arranged.

In another embodiment (not shown) the height of at least one of the longitudinal chambers may be decreased at the outlet end 6 of the evacuation slide 4. By decreasing the height a recess in the chamber is arranged, which also facilitates exit from the evacuation slide 4 due to the fact that the evacuated person not need to stride over the chambers. Furthermore, by incorporating the natural exits in the evacuation slide it have been observed that the persons to be evacuated are more rapid lead away from the evacuation slide 4.

Also, in Fig. 3 it is shown that the slide path 11 is tapered towards the middle of the slide path at the outlet end 6 of the slide 4, which also facilitate easy exit of the evacuated persons due to the fact that the persons have to move a shorter distance before they reach the bottom of the liferaft. Again, within the inventive idea only one side of the slide path may be tapered.

In Fig. 4 the evacuation slide 4 according to the invention is shown in a side view. The evacuation slide 4 may also comprise two additionally longitudinal inflatable chambers, which are adapted to stretch the slide path as well as keeping it stretched during evacuation. The two other longitudinal inflatable chambers 9, 10 are in this embodiment arranged on top of the other longitudinal chambers and from the slide path and upwards for providing a side barrier, which secure that the persons to be evacuated not unintended fall out of the evacuation slide during the evacuation.

Furthermore, the stop element may be integrated with the evacuation slide. Also in Fig. 4 the exit 12 between the stop element 8 and the longitudinal chamber 9 is shown.

The height h of the stop element 8 may be between 0.3 and 2.0 meters, preferably between 0.5 and 1.2 meters, most preferable between 0.7 and 0.9 meters. A further advantage has been observed when the evacuated person uses the stop element 8 as a railing and thereby as a support when he or she is leaving the evacuation slide 4. It is also of high importance that the stop element 8 has a height which prevents the evacuated person in being squeezed between stop element 8 and the canopy of the liferaft.

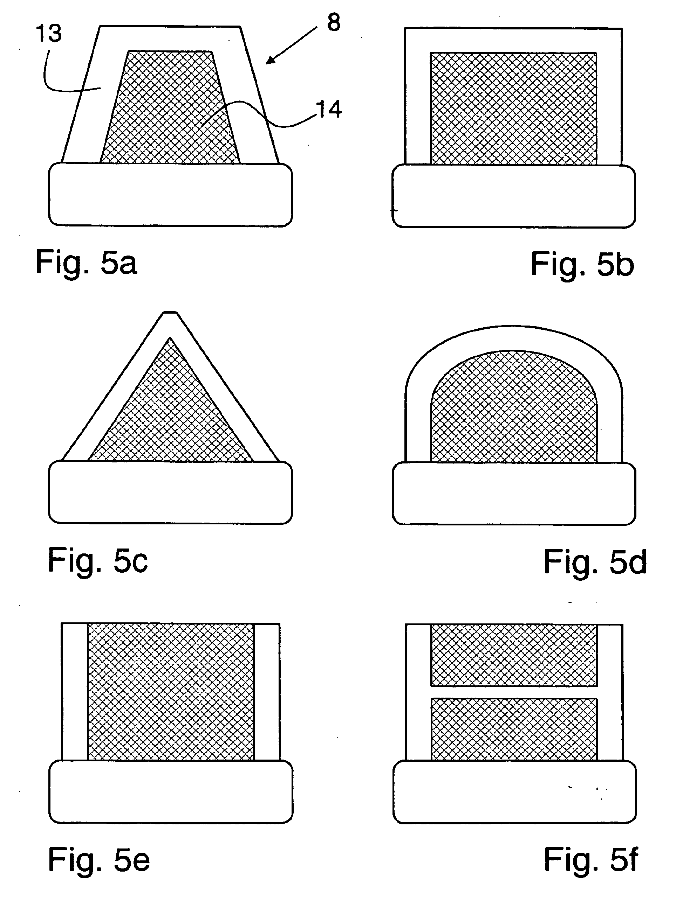

In Figs. 5a-5f are different designs of the stop element 8 according to the invention shown. The stop element 8 comprises a frame structure 13 for supporting a fabric 14. The fabric 14 may be a cloth, a net, a durable textile, a canvas or a coated fabric or the like. Also a depiction of two footprints maybe illustrated in the middle of the fabric 14 for an indication of where to place the feet when the person to be evacuated is sliding towards the stop element. Preferably, the frame structure 13 is inflatable.

In Fig. 5a a frame structure 13 is shown which have a trapezium configuration. Other configurations of the frame structure are shown in Figs. 5b-5f, all having in common that they are adapted to support and stretch the fabric.

Even though the above description of preferred embodiments of the invention primarily is described in connection with evacuation from ships and vessels at sea to a liferaft it could as well be evacuation to a platform or another vessel. It is within the inventive idea that the evacuation slide also may be used in connection with other evacuation situations for example evacuation from a sea installation, from an airplane or a house.

Although the invention above has been described in connection with preferred embodiments of the invention, it will be evident for a person skilled in the art that several modifications are conceivable without departing from the invention as defined by the following claims.

## Claims

1. An evacuation slide (4) having an inlet end (5), an outlet end (6) and a longitudinal part (7) extending between said ends the longitudinal part (7) comprise at least two longitudinal inflatable chambers (9, 10) and at least one slide path (11) **characterised in that** a stop element (8) is arranged transversely to the longitudinal part (7), extending upwards from the longitudinal part (7) at the outlet end (6).

2. An evacuation slide (4) according to claim 1, wherein the stop element (8) is extending upwards from the longitudinal part (7) with an angle between 60 and 150 degrees in relation to said longitudinal part (7), preferably 80 and 120 degrees.

3. An evacuation slide (4) according to any one of the preceding claims, wherein the stop element (8) is inflatable.

4. An evacuation slide (4) according to claim 1, wherein the stop element (8) comprise a frame structure (13) for supporting a fabric (14).

5. An evacuation slide (4) according to claim 4, wherein said frame structure (13) is inflatable.

6. An evacuation slide (4) according to any of the preceding claims, wherein the stop element (8) is integrated with the slide.

7. An evacuation slide (4) according to any one of the preceding claims, wherein the height of the stop element (8) is between 0.3 and 2.0 meters, preferably between 0.5 and 1.2 meters, most preferable between 0.7 and 0.9 meters.

8. An evacuation slide (4) according to any one of the preceding claims, wherein an exit (12) is arranged between the stop element (8) and the longitudinal chambers (9, 10).

9. An evacuation slide (4) according to claim 8, wherein at least one of the longitudinal chambers (9, 10) ends before the stop element (8) so that the exit (12) is formed there between.

10. An evacuation slide (4) according to claim 8, wherein the height of at least one of the longitudinal chambers (9. 10) are decreased at the outlet end (6) of the slide.

11. An evacuation slide (4) according to claim 8, wherein the slide path (11) is tapered at the outlet end (6) of the slide.

12. An evacuation slide (4) according to any one of the preceding claims for use in connection with ships or vessels.

## Patentansprüche

1. Evakuierrutsche (4), die ein Einlassende (5) und ein Auslassende (6) sowie einen länglichen Teil (7) hat, der sich zwischen diesen Enden erstreckt, wobei der längliche Teil (7) wenigstens zwei längliche aufblasbare Kammern (9, 10) und wenigstens einen Gleitweg (11) enthält, **dadurch gekennzeichnet, dass** ein Anschlagselement (8) quer zum länglichen Teil (7) angeordnet ist, das sich von dem länglichen Teil (7) am Auslassende (6) nach oben erstreckt.

2. Evakuierrutsche (4) nach Anspruch 1, bei der sich das Anschlagselement (8) von dem länglichen Teil (7) in einem Winkel zwischen 60 und 150 Grad im Bezug auf den länglichen Teil (7), vorzugsweise jedoch zwischen 80 und 120 Grad nach oben erstreckt.

3. Evakuierrutsche (4) nach einem der vorhergehenden Ansprüche, bei der das Anschlagselement (8) aufblasbar ist.

4. Evakuierrutsche (4) nach Anspruch 1, bei der das Anschlagselement (8) eine Rahmenstruktur (13) zum Halten eines Gewebes (14) enthält.

5. Evakuierrutsche (4) nach Anspruch 4, bei der die Rahmenstruktur (13) aufblasbar ist.

6. Evakuierrutsche (4) nach einem der vorhergehenden Ansprüche, bei der das Anschlagselement (8) in die Rutsche integriert ist.

7. Evakuierrutsche (4) nach einem der vorhergehenden Ansprüche, bei der die Höhe des Anschlagselementes (8) zwischen 0,3 und 2,0 m, vorzugsweise zwischen 0,5 und 1,2 m und bestenfalls zwischen 0,7 und 0,9 m liegt.

8. Evakuierrutsche (4) nach einem der vorhergehenden Ansprüche, bei der ein Ausgang (12) zwischen dem Anschlagselement (8) und den länglichen Kammern (9, 10) angeordnet ist.

9. Evakuierrutsche (4) nach Anspruch 8, bei der wenigstens eine der länglichen Kammern (9, 10) vor dem Anschlagselement (8) derart endet, dass der Ausgang (12) dazwischen ausgebildet ist.

10. Evakuierrutsche (4) nach Anspruch 8, bei der die Höhe wenigstens einer der länglichen Kammern (9, 10) am Auslassende (6) der Rutsche verringert ist.

11. Evakuierrutsche (4) nach Anspruch 8, bei der der Gleitweg (11) an dem Auslassende (6) der Rutsche abgeschrägt ist.

12. Evakuierrutsche (4) nach einem der vorhergehenden Ansprüche für die Verwendung in Verbindung mit Booten oder Schiffen.

## Revendications

1. Toboggan d'évacuation (4) ayant une extrémité d'entrée (5), une extrémité de sortie (6) et une partie longitudinale (7) s'étendant entre lesdites extrémités, la partie longitudinale (7) comprend au moins deux chambres gonflables longitudinales (9, 10) et au moins un chemin de glissement (11), **caractérisé en ce que**
un élément d'arrêt (8) est agencé transversalement à la partie longitudinale (7) s'étendant vers le haut depuis la partie longitudinale (7) au niveau de l'extrémité de sortie (6).

2. Toboggan d'évacuation (4) selon la revendication 1, dans lequel l'élément d'arrêt (8) s'étend vers le haut depuis la partie longitudinale (7) avec un angle entre 60 et 150 degrés relativement à ladite partie longitudinale (7), de préférence entre 80 et 120 degrés.

3. Toboggan d'évacuation (4) selon l'une quelconque des revendications précédentes, dans lequel l'élément d'arrêt (8) est gonflable.

4. Toboggan d'évacuation (4) selon la revendication 1, dans lequel l'élément d'arrêt (8) comprend une structure de cadre (13) pour supporter un tissu (14).

5. Toboggan d'évacuation (4) selon la revendication 4, dans lequel ladite structure de cadre (13) est gonflable.

6. Toboggan d'évacuation (4) selon l'une quelconque des revendications précédentes, dans lequel l'élément d'arrêt (8) est d'un seul bloc avec le toboggan.

7. Toboggan d'évacuation (4) selon l'une quelconque des revendications précédentes, dans lequel la hauteur de l'élément d'arrêt (8) est entre 0,3 et 2,0 mètres, de préférence entre 0,5 et 1,2 mètres, plus préférablement entre 0,7 et 0,9 mètres.

8. Toboggan d'évacuation (4) selon l'une quelconque des revendications précédentes, dans lequel une sortie (12) est agencée entre l'élément d'arrêt (8) et les chambres longitudinales (9, 10).

9. Toboggan d'évacuation (4) selon la revendication 8, dans lequel au moins l'une des chambres longitudinales (9, 10) se termine avant l'élément d'arrêt (8) de telle manière que la sortie (12) est formée entre eux.

10. Toboggan d'évacuation (4) selon la revendication 8, dans lequel la hauteur d'au moins l'une des chambres longitudinales (9, 10) est diminuée au niveau de l'extrémité de sortie (6) du toboggan.

11. Toboggan d'évacuation (4) selon la revendication 8, dans lequel le chemin de glissement (11) est rétrécit en largeur à l'extrémité de sortie (6) du toboggan.

12. Toboggan d'évacuation (4) selon l'une quelconque des revendications précédentes destiné à être utilisé en liaison avec des bateaux ou des vaisseaux.
